# EUROPÄISCHE PATENTANMELDUNG

(11) **EP 2 405 603 A2**
(43) Veröffentlichungstag der Anmeldung: **11.01.2012**
(21) Anmeldenummer: 11005420.2
(22) Anmeldetag: 01.07.2011
(51) Int. Cl.: H04L 9/32

(54) **Gesicherter automatischer Austauch von Informationen zur Vertrauenswürdigkeit von Geschäfts- oder Kommunikationspartnern**

(30) Priorität: 06.07.2010 DE 102010026697
(71) Anmelder: Bundesdruckerei GmbH, 10969 Berlin (DE)
(72) Erfinder: Weiß, Niklas, 12489 Berlin (DE)

(57) **Zusammenfassung**

Die Erfindung betrifft ein Verfahren zum Verarbeiten eines Datensatzes, der von einem Unterzeichner digital signiert wurde. Das Verfahren umfasst das Empfangen des Datensatzes; das automatisches Prüfen einer digitalen Signatur des Datensatzes anhand eines vorab von dem Unterzeichner beschafften Zertifikats; und das automatisches Extrahieren von Nutzdaten aus dem Datensatz bei positivem Ergebnis des Prüfens der digitalen Signatur. Durch die automatisierte Verarbeitung des Datensatzes können die Abläufe ohne Eingriffe von Hand ablaufen. Damit sinkt das Fehlerpotential, die Sicherheitsbetrachtung vereinfacht sich, die Angriffsszenarien werden minimiert und die Daten können immer aktuell gehalten werden, ohne dass ständig Personal anwesend sein muss bzw. sich um die Aktualität der Daten kümmern muss. Die Erfindung betrifft auch ein Computerprogrammprodukt und ein Computersystem.

## Beschreibung

Die Erfindung betrifft ein Verfahren zum Verarbeiten eines Datensatzes, der von einem Unterzeichner digital signiert wurde, ein Computerprogrammprodukt, und ein Computersystem.

Bei einer Vielzahl von Datenverarbeitungsanwendungen müssen sensible Daten zwischen einer Anzahl von Anwendungsteilnehmern ausgetauscht werden. Um den Datenaustausch zwischen den Anwendungsteilnehmern im Hinblick auf ein mögliches Ausspähen der Daten durch unbefugte Dritte sicher zu gestalten, können im Prinzip Verschlüsselungstechniken angewendet werden. Eine anderes Bedürfnis besteht häufig darin, dass ein Empfänger nachprüfen können möchte, ob eine bestimmte Nachricht tatsächlich von dem vorgeblichen Absender stammt. Diesem Bedürfnis kann dadurch Rechnung getragen werden, dass Nachrichten digital signiert werden können. Der Empfänger kann die digitale Signatur der empfangenen Nachricht überprüfen. Die erfolgreiche Prüfung der digitalen Signatur wird als Authentifizierung bezeichnet.

Um eine Verschlüsselung und/oder Authentifizierung anwenden zu können, einigen sich zwei Anwendungsteilnehmer, die zukünftig sensible Daten austauschen möchten, zunächst auf die Art und Weise der Verschlüsselung. In der Regel tauschen die zwei Anwendungsteilnehmer den oder die Schlüssel aus, die sie zur Verschlüsselung verwenden wollen. Je nachdem welche Verschlüsselungstechnik angewendet wird, kann (können) der (die) Schlüssel auf demselben Transportweg wie später die Daten ausgetauscht werden, falls die Missbrauchsmöglichkeiten durch einen unbefugten Dritten relativ gering sind, oder der (die) Schlüssel muss (müssen) seinerseits auf sichere Art und Weise ausgetauscht werden, beispielsweise durch Speichern auf einem physikalischen, computerlesbaren Datenmedium und durch gesichertes Verschicken des Datenmediums an den jeweils anderen Anwendungsteilnehmer.

Es kann vorkommen, dass die Menge der Anwendungsteilnehmer sich ständig ändert. Aus Sicherheitsgründen kann es auch sein, dass die Anwendungsteilnehmer ihre Schlüssel in regelmäßigen Zeitabständen ändern. Dies führt zu der Notwendigkeit, die zur Kommunikation mit den anderen Anwendungsteilnehmern verwendeten Schlüssel und/oder Signaturen ständig auf einem aktuellen Stand zu halten.

Insbesondere im Public-Key-Infrastructure (PKI)-Umfeld besteht oft die Notwendigkeit, für die Realisierung insbesondere firmenübergreifender Geschäftsprozesse Informationen über die Anwendungsteilnehmer zwischen allen Kommunikationspartnern auszutauschen, auch wenn sich diese unter Umständen nicht bekannt sind. Dafür ist als ein möglicher Weg der Austausch von digital signierten und/oder verschlüsselten Teilnehmerlisten etabliert. Derartige digital signierte und/oder verschlüsselte Teilnehmerlisten sind in manchen Anwendungen als "Trust Service Lists" (TSL) bekannt, welche als signierte Liste die Wurzelzertifikate der teilnehmenden Unternehmen enthält. Der Austausch erfolgt derzeit weitgehend manuell bzw. teilautomatisiert, z.B. via verschlüsselter Emails, aus der die Informationen von Hand zur Weiterverarbeitung gespeichert bzw. gereicht werden müssen.

Der Erfindung liegt demgegenüber die Aufgabe zugrunde, ein verbessertes Verfahren bereitzustellen, das diesen Austausch automatisiert und die Anwendungsteilnehmer von der Notwendigkeit entbindet, von Hand in die Prozesse eingreifen zu müssen.

Die der Erfindung zugrunde liegenden Aufgaben werden jeweils mit den Merkmalen der unabhängigen Patentansprüche gelöst. Ausführungsformen der Erfindung sind in den abhängigen Ansprüchen angegeben.

Nach Ausführungsformen der Erfindung wird ein Verfahren zum Verarbeiten eines Datensatzes, der von einem Unterzeichner digital signiert wurde, geschaffen. Das Verfahren umfasst die folgenden Aktionen: Empfangen des Datensatzes; automatisches Prüfen einer digitalen Signatur des Datensatzes anhand eines vorab von dem Unterzeichner beschafften Zertifikats; automatisches Extrahieren von Nutzdaten aus dem Datensatz bei positivem Ergebnis des Prüfens der digitalen Signatur; und automatisches Ausführen einer mit dem Datensatz assoziierten Operation.

Durch den automatisierten Austausch der Informationen an einer automatischen Schnittstelle können die Austauschabläufe weitgehend oder ausschließlich ohne Eingriff von Hand ablaufen. Es wird erwartet, dass zumindest einer der folgenden Effekte erzielt werden kann: das Fehlerpotential sinkt, die Sicherheitsbetrachtung vereinfacht sich, die Angriffsszenarien werden minimiert und/oder die Daten können immer aktuell gehalten werden, auch ohne dass ständig Personal der teilnehmenden Unternehmen anwesend sein muss bzw. sich um die Aktualität der Daten kümmern muss. Die Vereinfachung der Sicherheitsbetrachtung kann beispielsweise dadurch erfolgen, dass es nur noch einen (quasi-) allgemeingültigen Prozess gibt, der gegenüber allen teilnehmenden Parteien im Prinzip identisch angewendet wird. Dieser allgemeingültige Prozess ersetzt eine Vielzahl von bilateralen Verfahren, die zwischen den teilnehmenden Parteien abgestimmt werden mussten. Der allgemeingültige Prozess kann im Vorfeld aus Informationstechnologie-Sicherheitssicht durchleuchtet werden und es kann zu diesem allgemeingültigen Prozess ein Sicherheitskonzept mit Angriffsszenarien, Risikoabschätzung und Gegenmaßnahmen erstellt und bei Bedarf geprüft werden. Die Allgemeingültigkeit des Prozesses kann dadurch erreicht werden, dass bei jedem Anwendungsteilnehmer das gleiche Softwareprogramm (gegebenenfalls für verschiedene Plattformen) läuft, welches für die Verarbeitung des Datensatzes zuständig ist.

Die automatische Schnittstelle arbeitet vorzugsweise SSL-basiert, ist aber nicht identisch zu einer herkömmlichen SSL-Verbindung (online) konfiguriert, sondern asynchron konfiguriert, beispielsweise über eMail oder Memorystick, der per Post geschickt werden kann.

Beispielhaftes Szenario: Die deutsche CA gibt ein neues Zertifikat heraus, das in die Zertifikatslisten der anderen Länder, beispielsweise Italien, einzupflegen ist. Bislang war geplant, diesen Vorgang manuell durchzuführen, weil die CA's nicht miteinander verbunden sind - im Gegenteil - es bestehen hohe Anforderungen, eine CA weitestgehend von ihrer Umgebung abzuschotten. Das Neue an der Erfindung sind vor diesem Hintergrund insbesondere a) das Vorsehen von Zertifikatslisten im CA-Umfeld und b) die automatisierte Eintragung eines neuen Zertifikats in einer ausländischen Zertifikatsliste, insbesondere über ein Netz, insbesondere über das Internet.

Der nunmehr (auch vor dem Hintergrund der Erfindung) vorgesehene Prozess sieht folgendermaßen aus: Per Diplomatenkoffer wird eine CD mit dem Erstzertifikat der ausstellenden CA beispielsweise zur italienischen CA gebracht und dort die CD eingespielt. Für das Folgezertifikat ist nunmehr vorgesehen, dieses mittels des alten Zertifikats zu signieren bzw. die Liste der deutschen CA zu signieren, die signierte Liste per Kommunikationsnetz an die italienische CA zu senden, dort die Signatur der signierten Liste zu prüfen und schließlich - automatisiert - den signierten Inhalt der Liste zu extrahieren und in die Liste der italienischen CA zu integrieren. Es werden also die transferierten Zertifikate in die lokale Zertifikatsliste integriert. Da das deutsche Erstzertifikat bereits (auf diplomatisch-physikalischem Wege) bei der italienischen CA vorliegt, kann die Authentizität des Folgezertifikat recht einfach überprüft werden.

Der Vorgang ist verallgemeinerbar, beispielsweise kann er dazu verwendet werden, allgemeine Geschäftsprozesse im PKI-Umfeld zu automatisieren: Die Integration des signierten Inhalts in die Geschäftsprozesse könnte beispielsweise auch auf Preisvorgaben oder dergl. bezogen werden.

Nach einer Ausführungsform der Erfindung kann das Verfahren weiterhin ein automatisches Entschlüsseln des Datensatzes umfassen. Dieses Entschlüsseln kann nach dem Prüfen der digitalen Signatur des Datensatzes und unter der Voraussetzung eines positiven Ergebnisses dieses Prüfens der digitalen Signatur erfolgt. Es ist aber auch möglich, den Datensatz zunächst zu entschlüsseln und dann die digitale Signatur zu prüfen. Durch die Verschlüsselung des Datensatzes kann weitgehend gewährleistet werden, dass der Datensatz im Klartext nur einem geplanten Empfängerkreis zugänglich gemacht wird. Der Datensatz kann entweder individuell für jeden Empfänger einzeln verschlüsselt werden, indem ein nur für diesen Empfänger gültiger Schlüssel zum Verschlüsseln verwendet wird. Alternativ kann der Datensatz für eine Gruppe von Empfängern oder für sämtliche Empfänger mit dem gleichen Schlüssel verschlüsselt werden.

Nach einer Ausführungsform der Erfindung kann die digitale Signatur vor dem Senden des Datensatzes beim Unterzeichner unter Verwendung eines sicheren Unterzeichner-Schlüsselspeichers erfolgt sein. Beispiele für sichere Schlüsselspeicher sind SmartCards, Harware Security Modules (HSMs) und SIM-Karte (SIM: Subscriber Identity Module). Die Tatsache, dass die digitale Signatur des Datensatzes nur dann korrekt vorgenommen werden kann, wenn der Unterzeichner über den sicheren Unterzeichner-Schlüsselspeicher verfügt, vermindert die Möglichkeit von Missbrauch, da es den zum Signieren notwendigen Schlüssel physikalisch nur einmal gibt. Insbesondere wird auf diese Weise verhindert, dass ein Unbefugter auf irgendeine Weise eine digitale Kopie von dem zum Signieren verwendeten Schlüssel macht, denn ein Auslesen des Schlüssels aus dem sicheren Schlüsselspeicher ist in der Regel nicht möglich (oder nur mit erheblichem Aufwand). Ein Schlüssel, der lediglich als Datei auf einem Rechner des Unterzeichners abgelegt ist, könnte dagegen von einem Netzwerk-Eindringling oder auch von einem unehrlichen Mitarbeiter kopiert werden. Der Besitz des zum Signieren verwendeten Schlüssels könnte den Netzwerk-Eindringling, den unehrlichen Mitarbeiter oder einen Dritten in die Lage versetzen, korrekt signierte Datensätze mit gefälschten Informationen an die Anwendungsteilnehmer zu verteilen. Die Anwendungsteilnehmer würden aufgrund der digitalen Signatur den gefälschten Informationen vertrauen und somit anfällig für Betrugsszenarien werden.

Nach einer Ausführungsform der Erfindung kann das automatische Prüfen der digitalen Signatur unter Verwendung eines sicheren Anwender-Schlüsselspeicher erfolgen. Auch auf der Anwenderseite kann die Verwendung eines sicheren Anwender-Schlüsselspeichers sinnvoll sein. Beispielsweise kann auf diese Weise verhindert werden, dass ein Eindringling auf dem Anwender-Computersystem den echten zur Signaturprüfung verwendeten Schlüssel durch einen gefälschten Schlüssel ersetzt. Der gefälschte Schlüssel würde dann bei der Signaturprüfung vorgaukeln, dass der Datensatz korrekt signiert ist, obwohl der Datensatz in Wirklichkeit von dem Eindringling digital signiert wurde und gefälschte Informationen enthält. Ein Schlüssel, der in einem sicheren Anwender-Schlüsselspeicher gespeichert ist, ist gegen derartige Manipulationen sehr viel immuner, da der Eindringling nun den physikalisch greifbaren Schlüsselspeicher austauschen müsste, wofür er Zugang zum Standort des ComputerSystems haben müsste.

Nach einer Ausführungsform der Erfindung kann das Verfahren weiterhin umfassen: ein Signieren des Datensatzes mit einer weiteren digitalen Signatur bei positivem Ergebnis des Prüfens der digitalen Signatur; und ein Bereitstellen des mit der weiteren digitalen Signatur signierten Datensatzes für weitere Empfänger. Diese durch den Empfänger vorgenommenen Maßnahmen erlauben es beispielsweise, den Datensatz innerhalb von Verteilungshierarchien zu verteilen. Ausgehend von einer zentralen Wurzel der Verteilungshierarchie wird der digital signierte Datensatz zunächst an einige Empfänger einer ersten Empfängergruppe gesendet oder für diese bereitgestellt. Diese Empfänger sind in der Lage, die digitale Signatur der zentralen Wurzel zu prüfen. Weitere Empfänger aus einer zweiten Empfängergruppe sind dagegen nicht in der Lage, die digitale Signatur der zentralen Wurzel zu prüfen, wohl aber die digitale Signatur von einem der Empfänger in der ersten Empfängergruppe. Durch das beschriebene Verfahren kann der Datensatz auch an die Empfänger in der zweiten Empfängergruppe verteilt werden. Dabei vertrauen diese auf die digitale Signatur eines Empfängers aus der ersten Empfängergruppe. Das beschriebene Verfahren kann dazu verwendet werden, vorhandene Verteilerhierarchien zu einer größeren Verteilerhierarchie zusammenzusetzen, wie es beispielsweise bei der Einführung der elektronischen Gesundheitskarte (eGK) in Deutschland durchgeführt wird, da so unterschiedliche Anwendungsteilnehmer wie Kostenträger (Krankenkassen), Leistungserbringer (Ärzte, Krankenhäuser), Herausgeber von Heilberufsausweisen (HBA), Kartenhersteller und Gerätehersteller miteinander kommunizieren müssen. Zum Teil bestehen bereits Teil-Verteilungshierarchien innerhalb bestimmter Gruppen der bei der elektronischen Gesundheitskarte beteiligten Einrichtungen, die mit dem beschriebenen Verfahren miteinander verknüpft werden können, ohne dass innerhalb der Teil-Verteilungshierarchien größere Änderungen vorgenommen werden müssten.

Nach einer Ausführungsform der Erfindung kann das Verfahren weiterhin ein Hinzufügen zu dem Datensatz von Signaturausstellerdaten umfassen, die Auskunft über weitere vertrauenswürdige Signaturaussteller geben.

Nach einer Ausführungsform der Erfindung kann die mit dem Datensatz assoziierte Operation ein Eintragen eines neuen Zertifikats des Unterzeichners in eine Zertifikatsliste umfassen, und zwar zur zukünftigen Verwendung als das vorab von dem Unterzeichner beschaffte Zertifikat. Das neue Zertifikat ersetzt somit das vorherige Zertifikat. Dabei wird das vorherige Zertifikat herangezogen, um die Authentizität des neuen Zertifikats zu prüfen.

Nach einer Ausführungsform der Erfindung kann die mit dem Datensatz assoziierte Operation ein Auswerten von in dem Datensatz enthaltenen Zertifikatsperrinformationen umfassen. Zertifikatsperrinformationen können helfen sicherzustellen, dass unsicher gewordene Zertifikate nicht mehr zur Authentifizierung herangezogen werden. Diese Verwaltung von Zertifikaten oder Sperrinformationen/Sperrlisten in einer PKI kann unter Berücksichtigung der End-Entities gemäß dem X.509-Standard erfolgen.

Das Verfahren kann auch einen Schritt umfassen, in dem die Nutzdaten des Datensatzes nach erfolgtem Extrahieren in einen weiteren Datensatz eingefügt oder diesem hinzugefügt werden. Der Empfänger tritt daraufhin in die Rolle des Unterzeichners ein, indem er den weiteren Datensatz mit seinem eigenem Zertifikat (Empfängerzertifikat) signiert. Der mittlerweile zum (weiteren) Unterzeichner gewordene Empfänger ersten Grads sendet den von ihm signierten weiteren Datensatz an weitere Empfänger ("Empfänger zweiten Grades"). Falls es sich bei den Nutzdaten um Listen handelt, so kann der Empfänger den signierten Inhalt der Liste extrahieren und in eine von dem Empfänger selbst erstellte Liste integrieren. Auf diese Weise können mehr vertrauenswürdige Nutzdaten in den Datensatz aufgenommen werden, da ein Empfänger ersten Grads dafür einsteht, dass die von ihm weitergereichten Nutzdaten einem authentifizierten Datensatz entstammen. Die Empfänger zweiten Grads können sich also mit hoher Zuverlässigkeit darauf verlassen, dass sämtliche Nutzdaten zumindest auf indirekte Weise authentifiziert sind, selbst wenn den Empfängern zweiten Grads nur die die digitale Signatur eines Empfängers ersten Grads zur Authentifizierung zur Verfügung steht, nicht dagegen die digitale Signatur des ursprünglichen Unterzeichners.

In einem weiteren Aspekt betrifft die Erfindung ein Computerprogrammprodukt mit von einem Computersystem ausführbaren Instruktionen zur Durchführung eines Verfahrens, wie es soeben beschrieben wurde.

Nach einer Ausführungsform der Erfindung kann das Computerprogrammprodukt eines von einer Stand-alone Anwendung, einem Applet, einem Browser-Plug-In oder einer Anwendung auf Drittkomponenten sein. Ein Beispiel für eine Drittkomponente kann ein Kartenleser oder eine Smartcard sein. Es kann auch sein, dass einige Aktionen auf einem Computersystem ausgeführt und andere Aktionen auf einer solchen Drittkomponente. Beispielsweise könnten Ver-/Entschlüsselungsvorgänge, Signiervorgänge oder Signaturprüfungsvorgänge auf einer besonders gesicherten Drittkomponente wie einer Smartcard ausgeführt werden, um zu verhindern, dass die Ver- und Entschlüsselungsdatensätze durch Schadprogramme ausgelesen werden können.

In einem weiteren Aspekt betrifft die Erfindung ein Computersystem, das eine Netzwerkschnittstelle, einen Zertifikatspeicher, eine Signaturprüfungseinheit und eine Extraktionseinheit umfasst. Die Netzwerkschnittstelle ist ausgelegt und konfiguriert zum Empfangen eines Datensatzes, der von einem Unterzeichner mit einer digitalen Signatur signiert wurde. Der Zertifikatspeicher ist ausgelegt und konfiguriert zum Speichern eines Zertifikats, das von dem Unterzeichner herausgegeben wurde. Die Signaturprüfungseinheit ist ausgelegt und konfiguriert zum Prüfen der digitalen Signatur des Datensatzes. Die Extraktionseinheit ist ausgelegt und konfiguriert zum Empfangen eines Prüfungsergebnisses von der Signaturprüfungseinheit und zum Extrahieren von Nutzdaten aus dem Datensatz.

Das Computersystem führt das Extrahieren der Nutzdaten automatisch durch, wenn das Prüfungsergebnis der Signaturprüfungseinheit anzeigt, dass die digitale Signatur die Echtheit des empfangenen Datensatzes bestätigt. Das Extrahieren das Verarbeiten der in den Nutzdaten enthaltenen Information umfassen, wobei die Informationen an bestimmten (Speicher-)Orten innerhalb oder außerhalb des Computersystems gespeichert werden können. Beispielsweise können bestimmte Informationen in Konfigurationsdateien o.ä. übernommen werden, welche das Verhalten von bestimmten Programmen bestimmen. Dadurch können Aktualisierungen der Konfigurationsdateien o.ä. unverzüglich vorgenommen werden, sobald die Echtheit des Datensatzes bestätigt wurde. Da dieser Vorgang nach Maßgabe der Erfindung nicht mehr manuell ausgeführt wird, sinkt die Wahrscheinlichkeit von Tipp- und Übertragungsfehlern.

Die im Zusammenhang mit dem Computersystem beschriebenen Einheiten (Signaturprüfungseinheit, Extraktionseinheit, etc.) können Hardwarekomponenten des Computersystems sein, oder auch Softwaremodule/-programme, die von einem Prozessor ausgeführt werden können.

Nach einer Ausführungsform der Erfindung kann das Computersystem weiterhin eine Entschlüsselungseinheit umfassen, die ausgelegt und konfiguriert ist zum Entschlüsseln des Datensatzes. Die Entschlüsselungseinheit kann auch ausgelegt und konfiguriert sein, das Prüfungsergebnis von der Signaturprüfungseinheit zu empfangen und das Entschlüsseln in Abhängigkeit von dem Prüfungsergebnis durchzuführen.

Nach einer Ausführungsform der Erfindung kann der Zertifikatspeicher ein sicherer Schlüsselspeicher sein. Ein sicherer Schlüsselspeicher, wie eine SmartCard, ein HSM oder eine SIM-Karte, erschwert es einem Unbefugten, das Zertifikat zu manipulieren.

Nach einer Ausführungsform der Erfindung kann der sichere Schlüsselspeicher die Signaturprüfungseinheit umfassen. Die Manipulationsmöglichkeiten durch einen Unberechtigten sind geringer, wenn die Signaturprüfung innerhalb des sicheren Schlüsselspeichers abläuft.

Nach einer Ausführungsform der Erfindung kann das Computersystem weiterhin eine Signatureinheit umfassen, die ausgelegt und konfiguriert ist zum Empfangen des Prüfungsergebnisses und zum Signieren des Datensatzes mit einer weiteren Signatur. Die Netzwerkschnittstelle kann weiterhin ausgelegt und konfiguriert sein, den mit der weiteren digitalen Signatur signierten Datensatz über ein Netzwerk bereitzustellen. Dadurch kann das Computersystem nicht nur als Empfänger des Datensatzes dienen, sondern auch als Herausgeber des mit der weiteren digitalen Signatur signierten Datensatzes. Weitere Empfänger, die in der Vergangenheit mit dem Computersystem kommuniziert haben und Vertrauen zu dem Computersystem und dessen Betreiber haben, können nun den mit der weiteren digitalen Signatur signierten Datensatz verwenden. Das Computersystem übernimmt die Rolle eines Zwischenhändlers oder -treuhänders in Bezug auf den Datensatz.

Nach einer Ausführungsform der Erfindung kann das Computersystem weiterhin eine Datenverarbeitungseinheit umfassen, die ausgelegt und konfiguriert ist zum Hinzufügen von Signaturausstellerdaten zu dem Datensatz, die Auskunft über weitere vertrauenswürdige Signaturaussteller geben. Auf diese Weise kann das Computersystem für eine (weitere) Verbreitung des Datensatzes sorgen, wobei jedoch für weitere Benutzer des Datensatzes stets ersichtlich bleibt, über welche Verteilungswege der Datensatz zu ihm gelangt ist. Auch lässt sich die Vertrauenskette von einem Wurzelzertifikataussteller zu bis zu einem Endbenutzer nachvollziehen.

Das Computersystem kann weiterhin dieselben oder ähnlichen optionalen Merkmale aufweisen, wie das bereits beschriebene Verfahren.

Im Weiteren werden Ausführungsformen der Erfindung mit Bezug auf die Zeichnungen näher erläutert. Es zeigen:
Fig. 1 ein schematisches Flussdiagramm einer Ausführungsform eines erfindungsgemäßen Verfahrens,
Fig. 2 eine Verteilungshierarchie für Zertifikate,
Fig. 3 ein beispielhafter Datensatz in Form einer mehrfach signierten Zertifikatsliste, und
Fig. 4 ein schematisches Blockdiagramm einer Ausführungsform eines erfindungsgemäßen Computersystems.

Elemente der nachfolgenden Ausführungsformen, die einander entsprechen, werden mit denselben Bezugszeichen gekennzeichnet.

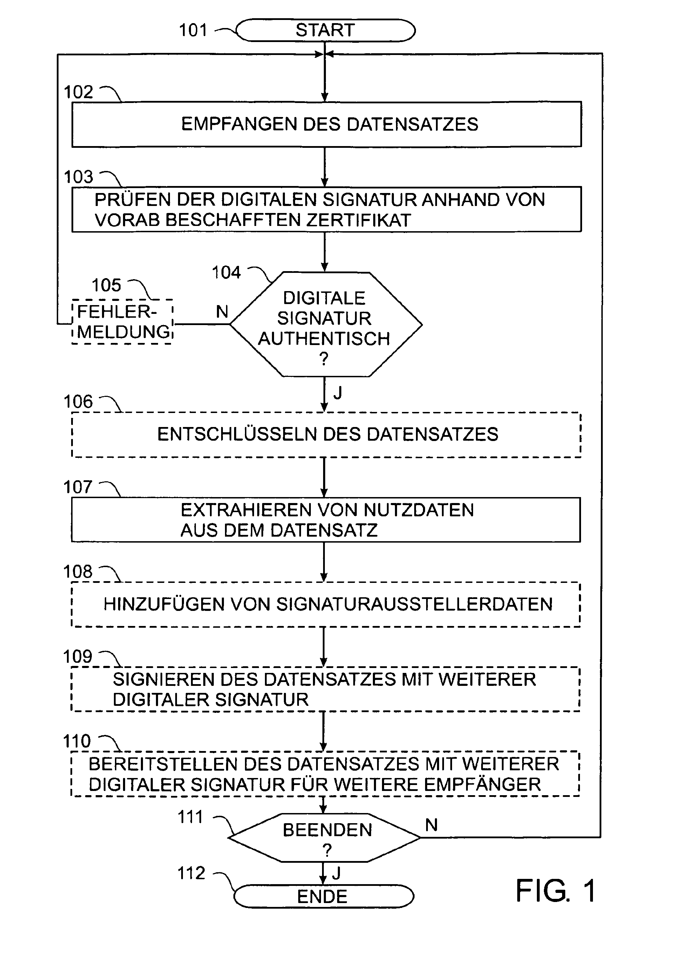

Die Fig. 1 zeigt eine Ausführungsform eines erfindungsgemäßen Verfahrens. Das Verfahren beginnt bei Schritt 101. In Schritt 102 wird ein Datensatz empfangen, von dem in Schritt 103 die digitale Signatur anhand eines zuvor beschafften Zertifikats überprüft wird. Das Zertifikat kann beispielsweise auf einem alternativen Transport von dem Unterzeichner zum Ausführungsort der Verfahrens gemäß Fig. 1 gelangt sein, so dass ein Angreifer weniger Möglichkeiten hätte, sowohl das Zertifikat als auch den Datensatz abzufangen und gegebenenfalls zu manipulieren.

An dem Verzweigungspunkt 104 wird anhand eines Prüfungsergebnisses von Schritt 103 geprüft, ob die digitale Signatur authentisch ist. Wenn die digitale Signatur nicht identisch ist, kann es eine optionale Fehlermeldung 105 geben und das Verfahren springt zurück an den Anfang bei 101, um auf den nächsten Datensatz zu warten. Wenn die digitale Signatur dagegen authentisch ist, kann der Datensatz in einem optionalen Schritt 106 entschlüsselt werden. Sofern der Datensatz unverschlüsselt versendet wurde, kann dieser Schritt 106 entfallen.

Bei Schritt 107 werden die Nutzdaten aus dem Datensatz extrahiert. Wie anhand der Struktur der Flussdiagramms zu sehen, geschieht dies nur, wenn sich die digitale Signatur als authentisch erwiesen hat. Die in dem Datensatz enthaltenen Nutzdaten werden dann in dem Anwender-Computersystem verwendet, um dem Computersystem beispielsweise weitere Zertifikate von weiteren möglichen Kommunikationspartner bekannt zu machen. Die Zertifikate werden verwendet, um die zwischen den teilnehmenden Parteien verschickten Nachrichten zu authentifizieren. Daher ist es für die Vertrauenswürdigkeit der teilnehmenden Parteien untereinander wichtig, dass sie sich auf die Richtigkeit und Authentizität der ausgetauschten Zertifikate verlassen können. Das hier beschrieben Verfahren leistet dies auf automatische Weise, ohne dass manuelle Eingriffe in das Verarbeiten der Nutzdaten aus dem Datensatz erforderlich sind.

Optional können noch die Schritte 108, 109 und 110 ausgeführt werden. In Schritt 108 können weitere Signaturausstellerdaten zu dem Datensatz hinzugefügt werden. Das Computersystem, das das Verfahren gemäß dem Flussdiagram von Fig. 1 ausführt, kann somit den Datensatz um eigene Nutzdaten oder andere Informationen ergänzen. In Schritt 109 kann der Datensatz mit einer weiteren digitalen Signatur signiert werden und in Schritt 110 kann der mit der weiteren digitalen Signatur versehene Datensatz für weitere Empfänger bereitgestellt werden. Bei den weiteren Empfängern kann es sich um Einrichtungen, Unternehmen, Personen etc. handeln, die dem Computersystem und dessen Betreiber vertrauen. Daher akzeptieren diese weiteren Empfänger in der Regel einen Datensatz, der mit der weiteren digitalen Signatur des Computersystems signiert ist.

An einem Verzweigungspunkt 111 wird festgestellt, ob das Verfahren beendet werden soll. Falls das Verfahren nicht beendet werden soll, dann springt es zurück zur Instruktion 102. Im gegenteiligen Fall wird das Verfahren bei der Instruktion 112 beendet.

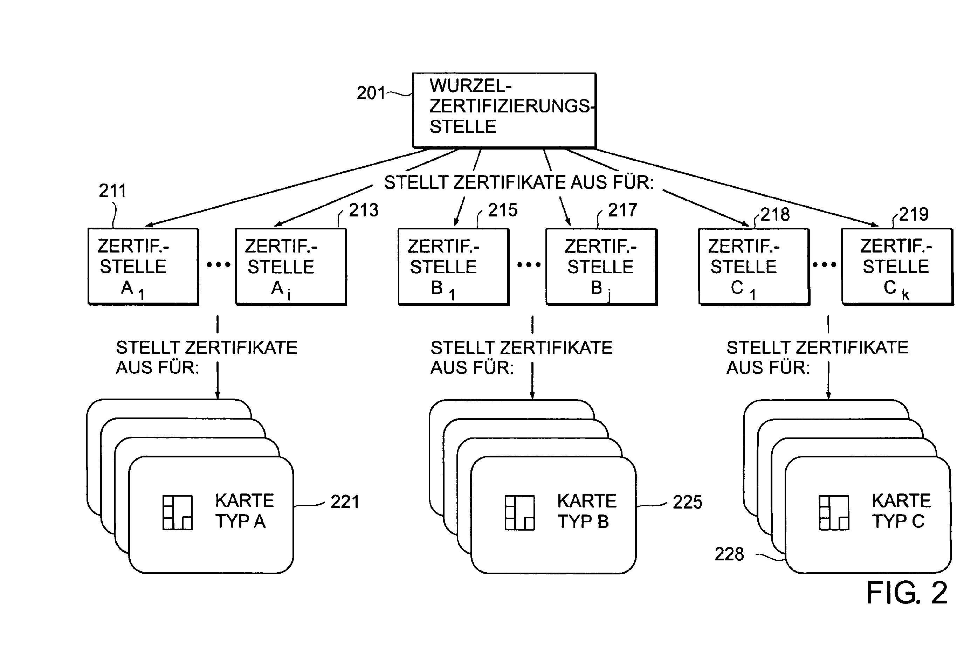

Fig. 2 zeigt eine Verteilungshierarchie für Zertifikate. Eine Wurzelzertifizierungsstelle 201 stellt Zertifikate aus für eine Vielzahl von Zertifizierungsstellen 211, 213, 215, 217, 218 und 219. Die Zertifizierungsstelle A1 211 und die Zertifizierungsstelle Ai 213 (sowie eventuell weitere Zertifizierungsstellen A2 bis Ai-1) stellen (Unter-)Zertifikate aus für einen speziellen Anwendungsfall, der in Fig. 2 mit "Karte Typ A" (Bezugszeichen 221) bezeichnet ist. Eine Karte vom Typ A kann beispielsweise eine elektronische Gesundheitskarte (eGK) sein. In analoger Weise stellen die Zertifizierungsstellen B1 215 bis Bj 217 (Unter-)Zertifikate für eine Verwendung beim Kartentyp B aus. Der Kartentyp B kann beispielsweise dem Heilberufsausweis (HBA) entsprechen. Die Zertifizierungsstellen C1 218 bis Ck 219 stellen (Unter-)Zertifikate für eine Verwendung beim Kartentyp C aus, welcher beispielsweise bei Gerätezertifikaten zum Einsatz kommen kann.

Die Wurzelzertifizierungsstelle 201 wird von den teilnehmenden Parteien als vertrauenswürdig eingestuft, so dass die teilnehmenden Parteien von der Wurzelzertifizierungsstelle 201 kommende Informationen ebenfalls als vertrauenswürdig einstufen. Jedoch verlangen gerade Anwendungen mit sensiblen Daten, dass überprüft werden kann, ob die Informationen auch tatsächlich in der Form, wie sie bei den teilnehmenden Parteien eingegangen sind, von der Wurzelzertifizierungsstelle 201 abgeschickt wurden, oder ob sie manipuliert wurden. Zu diesem Zweck signiert die Wurzelzertifizierungsstelle die Informationen über gültige Zertifikate ihrerseits mit einem Wurzelzertifikat. Die Zertifizierungsstellen A1, Ai, B1, Bj, C1 und Ck können somit die Authentizität der von der Wurzelzertifizierungsstelle übermittelten Information auf etwaige Manipulationen hin überprüfen.

Der in Fig. 2 gezeigte Anwendungsfall ist lediglich als Beispiel zu verstehen. In der Tat zeigt Fig. 2 einen Spezialfall, bei dem die in dem Datensatz enthaltenen Nutzdaten wiederum Zertifikate sind. Im allgemeinen Fall können die Nutzdaten beliebige Daten sein, die auf die beschriebene Weise verteilt und verarbeitet werden sollen.

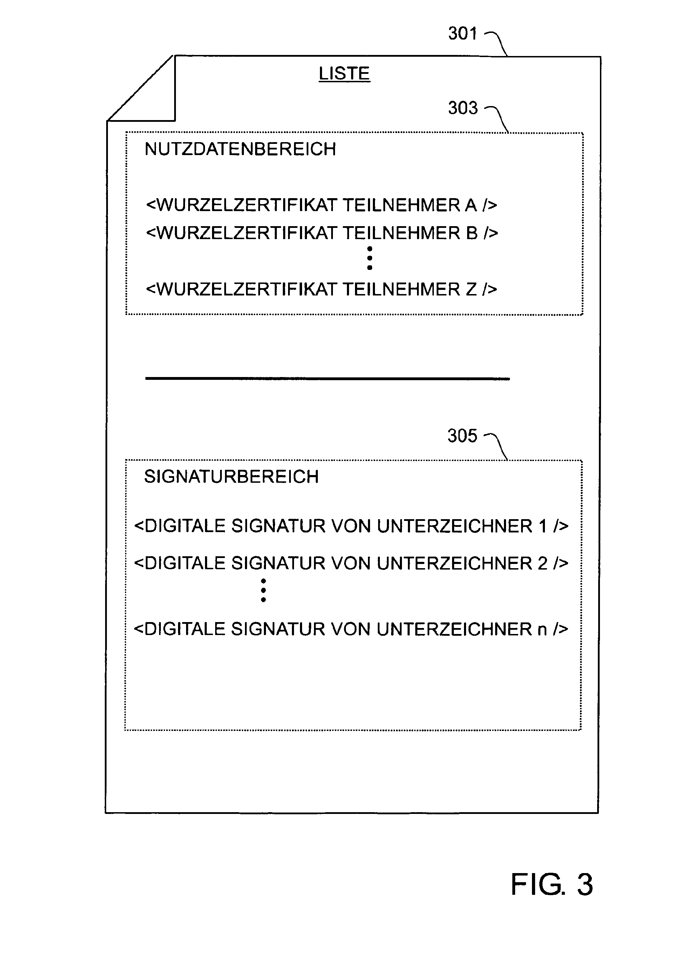

Fig. 3 zeigt einen beispielhaften Datensatz, wie er in Fig. 2 verwendet werden könnte. Der Datensatz umfasst eine Liste 301, die beispielsweise als sogenannte "Trust Service List" (TSL) fungiert. Die Liste 301 umfasst zwei Bereiche: einen Nutzdatenbereich 303 und einen Signaturbereich 305. In dem Nutzdatenbereich 303 sind als Nutzdaten die Wurzelzertifikate von Teilnehmern A, B bis Z aufgeführt. Im Signaturbereich 305 sind die digitalen Signaturen von einem oder mehreren (bis zu n) Unterzeichnern aufgeführt. Eine solche digitale Signatur kann beispielsweise aus den Nutzdaten und einem geheimen Signaturschlüssel berechnet werden. Mittels eines öffentlichen Schlüssels, der zu dem geheimen Schlüssel komplementär ist, kann die nachgeprüft werden, ob die digitale Signatur zu dem öffentlichen Schlüssel passt, und damit zu dem geheimen Signaturschlüssel des Unterzeichners.

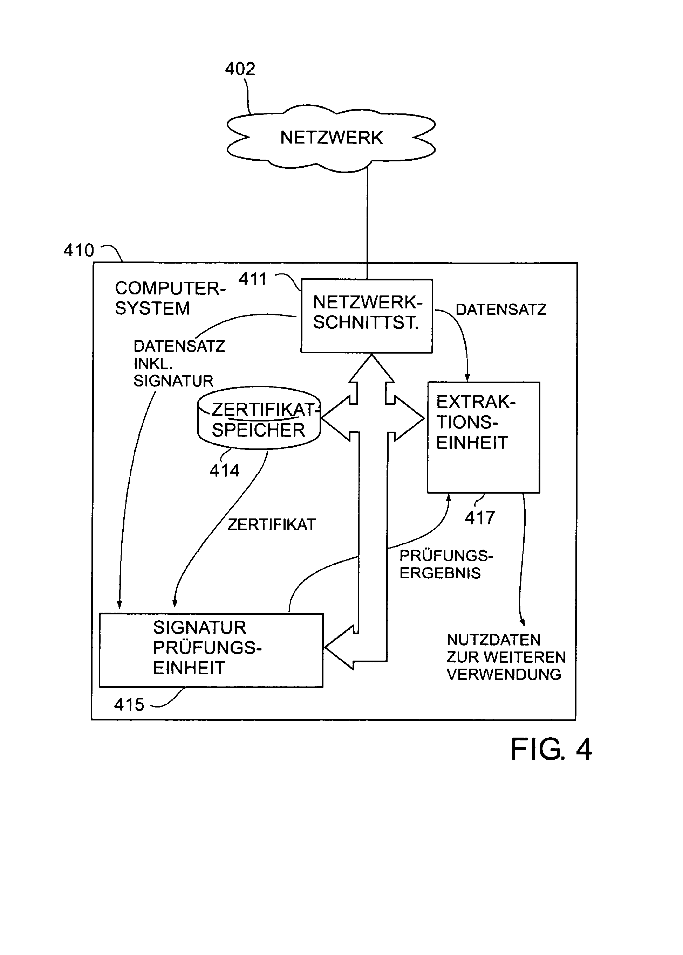

Fig. 4 zeigt ein schematisches Blockdiagramm einer Ausführungsform eines erfindungsgemäßen Computersystems 410, welches an eine Netzwerk 402 über eine Netzwerkschnittstelle 411 angeschlossen ist. Über das Netzwerk 402 und die Netzwerkschnittstelle erhält das Computersystem 410 Datensätze, die von einem Unterzeichner mittels einer digitalen Signatur signiert sind. Bei Eintreffen eines solchen Datensatzes wird der Datensatz mitsamt der digitalen Signatur an eine Signaturprüfungseinheit 415 übergeben. Die Signaturprüfungseinheit 415 erhält auch ein Zertifikat aus einem Zertifikatspeicher 414. Das Zertifikat wurde von dem Unterzeichner des Datensatzes herausgegeben. Mittels des Zertifikats kann die Signaturprüfungseinheit 415 prüfen, ob die digitale Signatur, mit der der Datensatz versehen ist, authentisch ist, d.h. ob der Datensatz tatsächlich in derselben Form und mit demselben Inhalt abgesendet wurde, wie er beim Computersystem 410 eingetroffen ist. Das Prüfungsergebnis wird an eine Extraktionseinheit 417 übergeben, welche daraufhin Nutzdaten aus dem Datensatz extrahiert. Die Nutzdaten werden dann zur weiteren Verwendung innerhalb des Computersystems 410 weiterverarbeitet.

Zur Veranschaulichung der hierin offenbarten Lehre sei das folgende beispielhafte Szenario angegeben: Die deutsche Zertifizierungsstelle (Certificate Authority (CA)) gibt ein neues Zertifikat heraus, das in die Zertifikatslisten anderer Länder, beispielsweise Italien, einzupflegen ist. Bislang war geplant, diesen Vorgang manuell durchzuführen, weil die Zertifizierungsstellen nicht miteinander verbunden sind. Im Gegenteil bestehen hohe Anforderungen, eine Zertifizierungsstelle weitestgehend von ihrer Umgebung abzuschotten. Durch die Erfindung wird insbesondere das Vorsehen von Zertifikatslisten im CA-Umfeld ermöglicht, sowie die automatisierte Eintragung eines neuen Zertifikats in einer ausländischen Zertifikatsliste ermöglicht, insbesondere über ein Netz, insbesondere über das Internet. Diese automatisierte Eintragung eines neuen Zertifikats kann im Rahmen des automatischen Ausführens einer mit dem Datensatz assoziierten Operation erfolgen.

Die Erfindung macht es möglich, dass zum Beispiel der folgende Prozess zum Einsatz kommt: Per Diplomatenkoffer wird z.B. eine CD mit dem Erstzertifikat der ausstellenden deutschen Zertifizierungsstelle beispielsweise zur italienischen Zertifizierungsstelle gebracht und dort die CD eingespielt. Für das Folgezertifikat ist nunmehr vorgesehen, dieses mittels des per Diplomatenkoffer ausgetauschten Zertifikats zu signieren bzw. die Liste der deutschen CA zu signieren, die signierte Liste per Kommunikationsnetz an die italienische CA zu senden, dort die Signatur der signierten Liste zu prüfen und schließlich - automatisiert - den signierten Inhalt der Liste zu extrahieren und in die Liste der italienischen CA zu integrieren. Es werden also die transferierten Zertifikate in die lokale Zertifikatsliste integriert. Da das deutsche Erstzertifikat bereits (auf diplomatisch-physikalischem Wege) bei der italienischen CA vorliegt, kann die Authentizität des Folgezertifikat recht einfach überprüft werden.

Erweitert man dieses Szenario, so können die jeweiligen nationalen Zertifizierungsstellen beispielsweise in der Bundesrepublik Deutschland, in Frankreich, in Italien oder den Niederlanden ihre Zertifikatslisten durch vertrauenswürdige und signierte Daten der anderen nationalen Zertifizierungsstelle erweitern. Nutzer der jeweiligen nationalen Zertifikatslisten in den jeweiligen Ländern authentifizieren die Zertifikatsliste anhand des Zertifikats der Zertifizierungsstelle, die für sie zuständig ist (z.B. die italienische Zertifizierungsstelle für Nutzer mit Wohnsitz/Sitz in Italien).

Die automatische Schnittstelle arbeitet vorzugsweise SSL-basiert. Die SSL-basierte automatische Schnittstelle wird jedoch nicht unbedingt identisch zu einer herkömmlichen SSL-Verbindung online konfiguriert, sondern kann auch asynchron konfiguriert werden, beispielsweise über eMail oder Memorystick, der per Post geschickt werden kann.

Ferner kann auch die Verwaltung von Zertifikaten oder Sperrinformationen/Sperrlisten in einer PKI mit einbezogen werden, unter Berücksichtung der End-Entities gemäß dem X.509-Standard.

Dieser Vorgang ist verallgemeinerbar, beispielsweise kann er dazu verwendet werden, allgemeine Geschäftsprozesse im PKI-Umfeld zu automatisieren: Die Integration des signierten Inhalts in die Geschäftsprozesse könnte beispielsweise auch auf Preisvorgaben oder dergl. bezogen werden.

Mit anderen Worten lehrt die vorliegende Erfindung ein Verfahren, ein Computerprogrammprodukt und ein Computersystem gemäß der untenstehenden Punkte:
1. Verfahren zum Verarbeiten eines Datensatzes, der von einem Unterzeichner digital signiert wurde, umfassend:
   Empfangen des Datensatzes;
   automatisches Prüfen einer digitalen Signatur des Datensatzes anhand eines vorab von dem Unterzeichner beschafften Zertifikats;
   automatisches Extrahieren von Nutzdaten aus dem Datensatz bei positivem Ergebnis des Prüfens der digitalen Signatur; und
   automatisches Ausführen einer mit dem Datensatz assoziierten Operation.
2. Verfahren gemäß Punkt 1, weiterhin umfassend:
   automatisches Entschlüsseln des Datensatzes.
3. Verfahren gemäß Punkt 1 oder 2, wobei die digitale Signatur beim Unterzeichner unter Verwendung eines sicheren Unterzeichner-Schlüsselspeichers erfolgte.
4. Verfahren gemäß einem der Punkte 1 bis 3, wobei das automatische Prüfen der digitalen Signatur unter Verwendung eines sicheren Anwender-Schlüsselspeichers erfolgt.
5. Verfahren gemäß einem der Punkte 1 bis 4, weiterhin umfassend:
   Signieren des Datensatzes mit einer weiteren digitalen Signatur bei positivem Ergebnis des Prüfens der digitalen Signatur;
   Bereitstellen des mit der weiteren digitalen Signatur signierten Datensatzes für weitere Empfänger.
6. Verfahren gemäß Punkt 5, weiterhin umfassend:
   Hinzufügen von Signaturausstellerdaten, die Auskunft über weitere vertrauenswürdige Signaturaussteller geben, zu dem Datensatz.
7. Verfahren gemäß einem der Punkte 1 bis 6, wobei die mit dem Datensatz assoziierte Operation ein Eintragen eines neuen Zertifikats des Unterzeichners in eine Zertifikatsliste umfasst zur zukünftigen Verwendung als das vorab von dem Unterzeichner beschaffte Zertifikat.
8. Verfahren gemäß einem der Punkte 1 bis 7, wobei die mit dem Datensatz assoziierte Operation ein Auswerten von in dem Datensatz enthaltenen Zertifikatsperrinformationen umfasst.
9. Computerprogrammprodukt mit von einem Computersystem ausführbaren Instruktionen zur Durchführung eines Verfahrens nach einem der vorhergehenden Ansprüche. Das Computerprogrammprodukt kann beispielsweise einen Datenträger, wie beispielsweise eine CD, eine DVD, einen USB-Stick, oder auch ein Embedded Device, umfassen, der die vorgenannten ausführbaren Instruktionen trägt, die, wenn sie auf einem Computer ausgeführt werden, ein Verfahren gemäß der vorgenannten Punkte 1 bis 8 ausführen. Für den Fall eines als Embedded Device ausgeführten Computerprogrammprodukts kann dieses insbesondere ein HSM (Hardware Security Module) umfassen. Die ausführbaren Instruktionen können direkt auf dem Datenträger gespeichert sein. Es kann aber auch vorgesehen sein, dass die ausführbaren Instruktionen auf dem Datenträger in einer Form vorliegen, die ein einfaches Installieren auf einem Computer ermöglichen, beispielsweise in Form einer oder mehrerer gepackten Datei/gepackten Dateien.
   Das Computerprogrammprodukt kann auch als Signalfolge ausgeführt sein, die, wenn sie auf einem Computer installiert wird, also in einem Arbeitsspeicher des Computers in Form von ausführbaren Instruktionen gespeichert wird, wobei diese ausführbaren Instruktionen, wenn sie auf einem Computer ausgeführt werden, ein Verfahren gemäß der vorgenannten Punkte 1 bis 8 ausführen.
10. Computersystem, umfassend:
   eine Netzwerkschnittstelle, ausgelegt und konfiguriert zum Empfangen eines Datensatzes, der von einem Unterzeichner mit einer digitalen Signatur signiert wurde;
   einen Zertifikatspeicher, ausgelegt und konfiguriert zum Speichern eines Zertifikats, das von dem Unterzeichner herausgegeben wurde;
   eine Signaturprüfungseinheit, ausgelegt und konfiguriert zum Prüfen der digitalen Signatur des Datensatzes;
   eine Extraktionseinheit, ausgelegt und konfiguriert zum Empfangen eines Prüfungsergebnisses von der Signaturprüfungseinheit und zum Extrahieren von Nutzdaten aus dem Datensatz zur nachfolgenden automatischen Ausführung einer mit dem Datensatz assoziierten Operation.
11. Computersystem gemäß Punkt 10, weiterhin umfassend:
   eine Entschlüsselungseinheit, ausgelegt und konfiguriert zum Entschlüsseln des Datensatzes.
12. Computersystem gemäß Punkt 10 oder 11, wobei der Zertifikatspeicher ein sicherer Schlüsselspeicher ist.
13. Computersystem gemäß Punkt 12, wobei der sichere Schlüsselspeicher die Signaturprüfungseinheit umfasst.
14. Computersystem gemäß einem der Punkte 10 bis 13, weiterhin umfassend:
   eine Signatureinheit, ausgelegt und konfiguriert zum Empfangen des Prüfungsergebnisses und zum Signieren des Datensatzes mit einer weiteren digitalen Signatur,
   wobei die Netzwerkschnittstelle weiterhin ausgelegt und konfiguriert ist, den mit der weiteren digitalen Signatur signierten Datensatz für weitere Empfänger über ein Netzwerk bereitzustellen.
15. Computersystem gemäß Punkt 14, weiterhin umfassend:
   eine Datensatzverarbeitungseinheit, die ausgelegt und konfiguriert ist zum Hinzufügen von Signaturausstellerdaten zu dem Datensatz, die Auskunft über weitere vertrauenswürdige Signaturaussteller geben.
16. Computersystem gemäß einem der Punkte 10 bis 15, wobei die mit dem Datensatz assoziierte Operation ein Eintragen eines neuen Zertifikats des Unterzeichners in eine Zertifikatsliste umfasst zur zukünftigen Verwendung als das vorab von dem Unterzeichner beschaffte Zertifikat.

### Bezugszeichenliste

- 101: Programminstruktionen ("Start")
- 102: Programminstruktionen
- 103: Programminstruktionen
- 104: Programminstruktionen (Verzweigungspunkt)
- 105: Programminstruktionen (Fehlermeldung)
- 106: Programminstruktionen
- 107: Programminstruktionen
- 108: Programminstruktionen
- 109: Programminstruktionen
- 110: Programminstruktionen
- 111: Programminstruktionen (Verzweigungspunkt)
- 112: Programminstruktionen ("Ende")
- 201: Wurzelzertifizierungsstelle
- 211: Zertifizierungsstelle A₁
- 213: Zertifizierungsstelle Aᵢ
- 215: Zertifizierungsstelle B₁
- 217: Zertifizierungsstelle Bⱼ
- 218: Zertifizierungsstelle C₁
- 219: Zertifizierungsstelle Cₖ
- 221: Karte Typ A
- 225: Karte Typ B
- 228: Karte Typ C
- 301: Datensatz in Form von Liste ("Trust Service List")
- 303: Nutzdatenbereich
- 305: Signatur(daten)bereich
- 402: Netwerk
- 410: Computersystem
- 411: Netzwerkschnittstelle
- 414: Zertifikatspeicher
- 415: Signaturprüfungseinheit
- 417: Extraktionseinheit

## Patentansprüche

1. Verfahren zum Verarbeiten eines Datensatzes, der von einem Unterzeichner digital signiert wurde, umfassend:
Empfangen des Datensatzes;
automatisches Prüfen einer digitalen Signatur des Datensatzes anhand eines vorab von dem Unterzeichner beschafften Zertifikats;
automatisches Extrahieren von Nutzdaten aus dem Datensatz bei positivem Ergebnis des Prüfens der digitalen Signatur; und
automatisches Ausführen einer mit dem Datensatz assoziierten Operation.

2. Verfahren gemäß Anspruch 1, weiterhin umfassend:
automatisches Entschlüsseln des Datensatzes.

3. Verfahren gemäß Anspruch 1 oder 2, wobei die digitale Signatur beim Unterzeichner unter Verwendung eines sicheren Unterzeichner-Schlüsselspeichers erfolgte.

4. Verfahren gemäß einem der Ansprüche 1 bis 3, wobei das automatische Prüfen der digitalen Signatur unter Verwendung eines sicheren Anwender-Schlüsselspeichers erfolgt.

5. Verfahren gemäß einem der Ansprüche 1 bis 4, weiterhin umfassend:
Signieren des Datensatzes mit einer weiteren digitalen Signatur bei positivem Ergebnis des Prüfens der digitalen Signatur;
Bereitstellen des mit der weiteren digitalen Signatur signierten Datensatzes für weitere Empfänger.

6. Verfahren gemäß Anspruch 5, weiterhin umfassend:
Hinzufügen von Signaturausstellerdaten, die Auskunft über weitere vertrauenswürdige Signaturaussteller geben, zu dem Datensatz.

7. Verfahren gemäß einem der Ansprüche 1 bis 6, wobei die mit dem Datensatz assoziierte Operation ein Eintragen eines neuen Zertifikats des Unterzeichners in eine Zertifikatsliste umfasst zur zukünftigen Verwendung als das vorab von dem Unterzeichner beschaffte Zertifikat.

8. Verfahren gemäß einem der Ansprüche 1 bis 7, wobei die mit dem Datensatz assoziierte Operation ein Auswerten von in dem Datensatz enthaltenen Zertifikatsperrinformationen umfasst.

9. Computerprogrammprodukt mit von einem Computersystem ausführbaren Instruktionen zur Durchführung eines Verfahrens nach einem der vorhergehenden Ansprüche.

10. Computersystem, umfassend:
eine Netzwerkschnittstelle, ausgelegt und konfiguriert zum Empfangen eines Datensatzes, der von einem Unterzeichner mit einer digitalen Signatur signiert wurde;
einen Zertifikatspeicher, ausgelegt und konfiguriert zum Speichern eines Zertifikats, das von dem Unterzeichner herausgegeben wurde;
eine Signaturprüfungseinheit, ausgelegt und konfiguriert zum Prüfen der digitalen Signatur des Datensatzes;
eine Extraktionseinheit, ausgelegt und konfiguriert zum Empfangen eines Prüfungsergebnisses von der Signaturprüfungseinheit und zum Extrahieren von Nutzdaten aus dem Datensatz zur nachfolgenden automatischen Ausführung einer mit dem Datensatz assoziierten Operation.

11. Computersystem gemäß Anspruch 10, weiterhin umfassend:
eine Entschlüsselungseinheit, ausgelegt und konfiguriert zum Entschlüsseln des Datensatzes.

12. Computersystem gemäß Anspruch 10 oder 11, wobei der Zertifikatspeicher ein sicherer Schlüsselspeicher ist und/oder, wobei der sichere Schlüsselspeicher die Signaturprüfungseinheit umfasst.

13. Computersystem gemäß einem der Ansprüche 10 bis 12, weiterhin umfassend:
eine Signatureinheit, ausgelegt und konfiguriert zum Empfangen des Prüfungsergebnisses und zum Signieren des Datensatzes mit einer weiteren digitalen Signatur,
wobei die Netzwerkschnittstelle weiterhin ausgelegt und konfiguriert ist, den mit der weiteren digitalen Signatur signierten Datensatz für weitere Empfänger über ein Netzwerk bereitzustellen.

14. Computersystem gemäß Anspruch 13, weiterhin umfassend:
eine Datensatzverarbeitungseinheit, die ausgelegt und konfiguriert ist zum Hinzufügen von Signaturausstellerdaten zu dem Datensatz, die Auskunft über weitere vertrauenswürdige Signaturaussteller geben.

15. Computersystem gemäß einem der Ansprüche 10 bis 14, wobei die mit dem Datensatz assoziierte Operation ein Eintragen eines neuen Zertifikats des Unterzeichners in eine Zertifikatsliste umfasst zur zukünftigen Verwendung als das vorab von dem Unterzeichner beschaffte Zertifikat.
